Europäisches Patentamt

European Patent Office

Office européen des brevets

(19)

(11) Publication number: **0 089 157**
A1

(12) **EUROPEAN PATENT APPLICATION**

(21) Application number: **83301182.8**

(22) Date of filing: **04.03.83**

(51) Int. Cl.³: **G 01 N 21/05**

(30) Priority: **15.03.82 US 358123**

(43) Date of publication of application:
**21.09.83 Bulletin 83/38**

(84) Designated Contracting States:
**DE FR GB**

(71) Applicant: **J & W SCIENTIFIC, INC.**
**3871 Security Park Drive**
**Rancho Cordova California(US)**

(72) Inventor: **Le Febre, David**
**2021 Hickok Road**
**Folsom California(US)**

(74) Representative: **Beresford, Keith Denis Lewis et al,**
**R.G.C. Jenkins & Co. 12-15, Fetter Lane**
**London EC4A 1PL(GB)**

(54) **Optical detector cell.**

(57) An optical detector cell (10) for determining the presence of a solute in a sample fluid includes a sample tube (12), inlet and outlet means (30,32) for the sample fluid, and first and second optical waveguides (16,20) for passing a beam of light axially through the sample tube. The detector cell finds particular use in miniature chromatographic and microspectroscopic applications where a very low volumetric flow of sample fluid is to be analyzed. By providing an optical flow path which is parallel to the fluid flow path, the thickness of the sample examined is maximized corresponding to a fixed sample volume, resulting in the ability to detect low threshold concentrations of solute.

EP 0 089 157 A1

./...

| OUTPUT | ANALYZER |
| LIGHT SOURCE | PHOTO-SENSOR |

26
24
18
22

FLUID SAMPLE
IN

30
10
38
20
36
16
40
14
12
32
36

*FIG.\_1.*

FLUID SAMPLE
OUT

9041-7/JJJJ01D

OPTICAL DETECTOR CELL

BACKGROUND OF THE INVENTION

1.   Field of the Invention

The present invention relates generally to a method and apparatus for detecting the presence of a solute in a fluid sample based on certain optical characteristics of the fluid, such as light absorbance, light-scattering and fluorescence.  More particularly, the invention concerns a novel detector cell for isolating the fluid sample, exposing the sample to a light source and collecting light from the sample.

A solute in a fluid sample can often be detected by measuring certain physical characteristics of the sample. In particular, the presence of a solute can affect the optical characteristics of a fluid, such as light absorbance at one or more wave lengths, light-scattering resulting from the presence of particulates in the sample and fluorescence resulting from the ability of certain analytes to absorb light of a given wavelength and reemit that light at the same or a different wavelength.  Although the precise detection method will vary for the three phenomena, each generally requires that the fluid sample be isolated, that light be directed at the sample in a controlled manner and that light passing through the sample (or fluorescing from the sample) be collected and transmitted to an analyzer to measure the desired characteristic.  Each of these functions may be accomplished in an optical detector cell which includes a chamber for isolating the fluid and means for transmitting light to the chamber and collecting light from the chamber.

Optical detector cells are often used in chromatographic applications where one or more solutes have been separated in a chromatographic column.  Specific separation techniques include liquid-solid, liquid-liquid, gas-solid and gas-liquid chromatography, where a mobile phase carrying the solute flows past a stationary phase with repeated sorption and desorption of each solute.  For each component where the ratio of distribution between the two phases is sufficiently different, the component will migrate at a different rate through the column and be discharged therefrom at a different time. Such differential migration may then be detected using an optical detector cell which receives the mobile phase (sample fluid) discharged from the column and continuously monitors for changes in one or more optical characteristics which may then be related to composition.

In recent years, the advent of high performance liquid chromatography (HPLC) microcolumns and other minaturized chromatographic techniques which utilize very small sample volumes require optical detectors which are capable of handling very low fluid flow rates. While a typical flow rate for an ordinary HPLC packed column is on the order of several ml/min, microcolumns may utilize only a few $\mu l/min$, or less.

The small column dimensions and correspondingly low flow rates characteristics of such miniaturized chromatographic systems require optical detectors having a very low internal volume. While microcolumns are highly efficient and can separate individual components as peaks with very small total volumes, band dispersion can occur within a large detector cell adversely affecting overall resolution. It has been estimated that detector cell volumes on the order of one nanoliter (nl) and below are required for microcolumns having inside diameters of $30\mu m$ and below. Yang, "The Theoretical and Practical Ranges of Microbore Column HPLC", Fourth International Symposium on Capillary Chromatography, Hindelang, West Germany (1981).

### DESCRIPTION OF THE PRIOR ART

A low volume detector comprising an extension of a fused silica chromatograph column where light is passed across the column and detected on the other side is disclosed in Yang, _supra_. A similar detector, where light from a laser is focused by a lens onto a quartz capillary tube, utilizes an optical wave guide to detect fluorescence induced by the incident light beam. Sepaniak and Yeung, "Determination of Adriamycin and Daunorubicin in Urine by HPLC with Laser Fluorometric Detection," J. Chromatgr., 190: 377-83 (1980). Another low volume detector is disclosed in Novotny, "Microcolumns in Liquid Chromatography," Anal. Chem., 53:1295-1308 (1981).

SUMMARY OF THE INVENTION

The present invention provides a low volume optical detector cell particularly adapted for use with miniaturized chromatograph columns and other on-line applications where a very small volume of sample fluid is continuously passed through the detector and analyzed. Although particularly adapted for such applications, the detector cell of the present invention will also find use with higher volume detection systems as well as with static sampling systems where a fixed amount of sample is drawn into the detector for non-repetitive analysis.

Generally, the optical detector cell will be used as a part of an analytical detection system including a light source and a photosensor. The detector cell comprises an elongate sample chamber having inlet and outlet means which together define an axial flow path for the sample fluid. A first optical waveguide is arranged to transmit light from the light source to one end of the sample chamber so that at least a portion of the light propagates axially into the chamber. A second optical waveguide is disposed at the opposite end of the sample chamber and collects light from the chamber and transmits that light to the photosensor. Using this arrangement, various optical characteristics of the sample fluid can be measured and used to quantitate one or more solutes which may be present in the fluid.

By directing the incident light axially into the sample chamber, a number of advantages are achieved. First, the threshold level of solute which may be detected is reduced as the length of the sample chamber is increased. According to Beer's Law, the absorptive capacity of a solute in the sample fluid is proportional to the thickness of the sample as well as the concentration of the solute. The present method maximizes the "thickness" of the sample under observation to increase the absolute value of absorbtion, while minimizing the volume of the detector as is necessary with miniaturized chromatographic systems.

A second advantage is gained from the manner of interfacing the optical waveguides with the internal core of the sampling chamber. By choosing a waveguide having a diameter substantially equal to the internal diameter of the sample chamber, the illuminated volume is increased and approaches the total volume of the chamber. By maximizing the illuminated volume, efficiency is increased, as practically all of the sample fluid flowing through the cell may be observed.

In the preferred embodiment, the sample chamber of the cell is formed from an amorphous material, such as fused silica, which can be drawn into a cylinder having a very narrow internal diameter. The chamber is interfaced at either end with an optical waveguide and normally a portion of the light emitted by the first or "source" waveguide propagates down the cylindrical wall of the chamber. To prevent this portion of the light from reaching the second or "output" waveguide and interfering with the measurement, an absorptive material is clad around the outside of the chamber. Additionally, to increase the portion of the light which is transmitted axially down the bore of the chamber and inhibit the light from entering the cylindrical wall, a reflective coating is usually deposited on the inner wall of the chamber.

BRIEF DESCRIPTION OF THE DRAWINGS

Fig. 1 is a sectional view of the preferred embodiment of the detector cell of the present invention with the remaining portion of the detection system illustrated schematically.

Fig. 2 is a sectional view of an alternate embodiment of the detector cell of the present invention.

Fig. 2A is a sectional view taken along line 2A-2A of Fig. 2.

Fig. 3 is an elevational view of a second alternate embodiment of the detector cell of the present invention.

### DESCRIPTION OF THE PREFERRED EMBODIMENTS

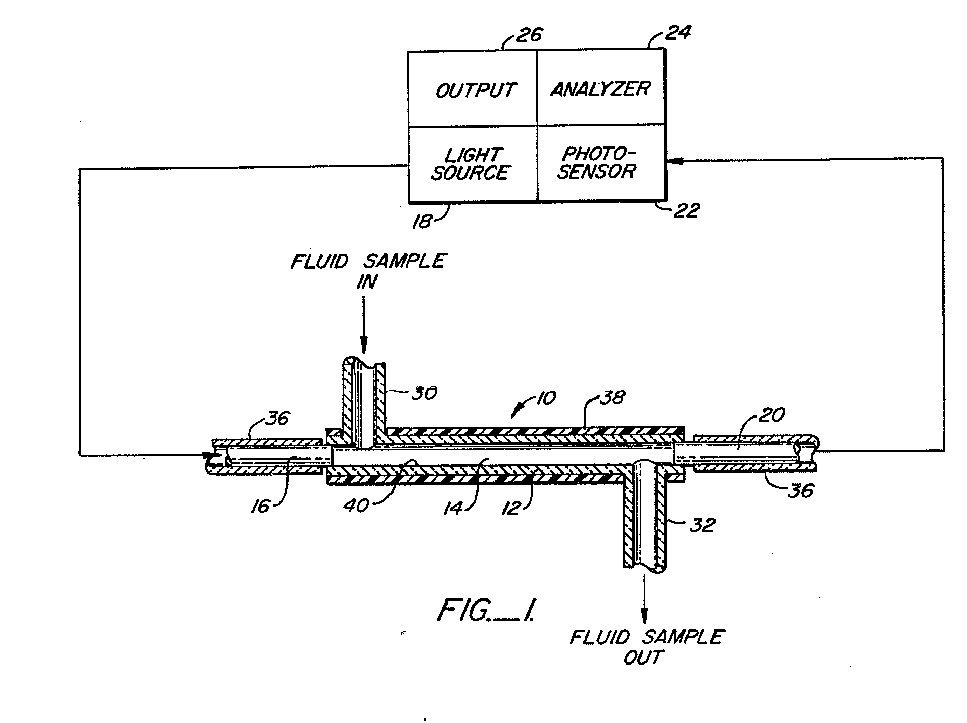

Referring to Fig. 1, an optical detector cell 10 comprises a cylindrical tube 12 defining a sample chamber 14, a first-optical waveguide 16 which transmits light from a light source 18 to the sample chamber 14, and a second optical waveguide 20 which transmits light from the sample chamber 14 to a photosensor 22. Normally, the detection system will also include an analyzer 24, typically a microprocessor, which receives information from the photosensor 22 and calculates a quantitative determination of an solute in a sample fluid, and an output 26, such as a graph plotter, cathode ray tube (CRT) or other visual display, which transmits the determination to the user.

The optical detector cell 10 will find its greatest use in miniaturized chromatographic and microspectroscopic applications where a very low volumetric flow of a sample fluid must be analyzed over time by measuring one or more optical properties of the fluid, such as visible or ultraviolet adsorption, light-scattering or fluorescence. The detector cell 10, however, is not limited to such dynamic applications and functions equally well to detect the presence of an analyte in a small, discrete volume of sample fluid which is held static in the sample chamber 14.

The sample fluid is introduced into the sample chamber 14 through an inlet tube 30 which penetrates the wall of the cylindrical tube 12 near one end thereof. An output tube 32 penetrates the wall near the opposite end of the cylindrical tube 12, and together the inlet tube 30 and outlet tube 32 define a flow path through the sample chamber 14 for the sample fluid. As illustrated, both the inlet tube 30 and the outlet tube 32 lie transversely to the axis of the cylindrical tube 12. In some cases, it may be preferred that the tubes 30, 32 be inclined relative to said axis to reduce turbulence as the sample fluid enters and is discharged from the sample chamber 14.

The cylindrical tube 12 typically has an inner diameter of 1μm with no upper limit, more usually between 10μm and 1mm. The length of the flow tube 12 will vary depending on the desired length of the optical path required for detection of the particular species. A lower expected threshold concentration of solute requires a longer optical path. The length will typically be from 0.1 to 10cm, usually in the range from 1 to 5cm, with a length of 1cm being standard.

It is desirable that the internal bore of the cylindrical tube 12 be substantially straight in the axial direction to limit losses as the light propagates therethrough. As will be discussed hereinafter, the interior of the cylindrical bore will usually have a reflective coating to reduce such losses, but such coating is not entirely effective.

The sample tube 12 can be constructed from a variety of materials, including Teflon®, borosilicate glass, soda-lime glass, fused silica glass and even stainless steel. In the case of low volume cells having inner diameters of 50 μm or less, it is highly desirable that the tube 12 be formed from an amorphous glass, such as fused silica, which can be drawn to tubes having very small diameters. With larger diameter cells, however, a wide variety of materials are suitable.

The inlet and outlet tubes 30, 32 are typically cylindrical, having internal diameters corresponding to that of the sample tube 12. Again, the material from which the inlet and outlet tubes 30, 32 are constructed depends in large part on the desired diameter. It is also important that the material of the inlet and outlet tubes 30, 32 be mechanically compatible with the material of the tube 12, particularly having a closely matched thermal expansion coefficient. Typically, the tubes 30, 32 will be formed from the same material as the sample tube 12.

As illustrated in Fig. 1, the first optical waveguide 16 penetrates an open end of the sample tube 12 and is fused thereto. The method of fusing depends on the particular materials involved. Typically both the waveguide 16 and the tube 12 will be glass and will be thermally welded together. Similarly, the second optical waveguide 20 is fused to the opposite end of the sample tube 12 so that waveguides 16, 20 are disposed at opposite ends of the sample chamber 14 to define an optical path therethrough. Although, as shown in Fig. 1, the first optical waveguide 16 is connected to the light source 18, while the second waveguide 20 is connected to the photosensor 22, this arrangement could be reversed without affecting the performance of the system.

Both the first and second optical waveguides 16, 20 are conventional optical fibers capable of conducting light in the visible and ultraviolet spectrums, typically from about 200 to 1,200nm, along a selected path. Usually, a single fiber will be employed for each waveguide 16, 20, although a bundle of fibers may be utilized for sample tubes 12 having a relatively large internal diameter.

For effective light transmission, the fibers must be highly transparent with smooth, reflective surfaces. Typically, such highly reflective surfaces are provided by total internal reflection, which results from encasing the fibers in a material having a lower refractive index, which may simply be air. It is preferred to surround the fibers with a second flexible plastic material 36 to prevent the fibers from picking up fingerprints or other marks which would impair the internal reflectance.

Fiber diameters of 10μm and below are quite feasible. Such fibers are highly flexible and permit circuitous routing of the waveguides 16, 20 to the light source 18 and photosensor 22. Moreover, because of the high transmission efficiency of such fibers, remote instrumentation can be located a long distance from the detector cell 10. Distances on the order of 100m and longer are quite feasible.

In operation, light from source 18 is transmitted via optical waveguide 16 to the first end of the sample tube 12. The waveguide 16 may be bent as it is routed from the light source 18 and the waveguide may enter the sample tube 12 at any convenient angle. Although the final segment of waveguide 16 is illustrated in axial alignment with the sample chamber 12, this is not necessary as the light emanating from the waveguide is divergent.

Such divergence results in a division of the light into three components. A first portion of the light is coupled into the inlet tube 30 (assuming that the tube is formed from a tranparent material). Similarly, a second portion of the light is coupled into the transparent wall of the sample tube 12 and is capable of propagating axially down the tube. Finally, a third portion of the light propagates down the internal bore of the sample tube 12 and eventually strikes the second optical waveguide 20.

In order to inhibit light which propagates down the cylindrical wall of the sample tube 12 from eventually entering the second optical waveguide 20, an absorptive cladding 38 is placed around the outside of the tube 12 and absorbs a very high percentage of the light before it can reach the second optical waveguide 20. The cladding may be any material which absorbs visible and/or UV light. A cladding formed from lamp black in an epoxy resin has been found suitable.

Additionally, it is desirable to coat the internal cylindrical wall of the sample tube 12 with a reflective material 40 to inhibit light which enters the sample chamber 14 from entering the wall of sample tube 12. The coating 40 can be formed from reflective material which may be conveniently deposited on the wall. Typically, an alcohol is heated under non-oxidizing conditions to deposit a layer of pyrolytic carbon on the wall.

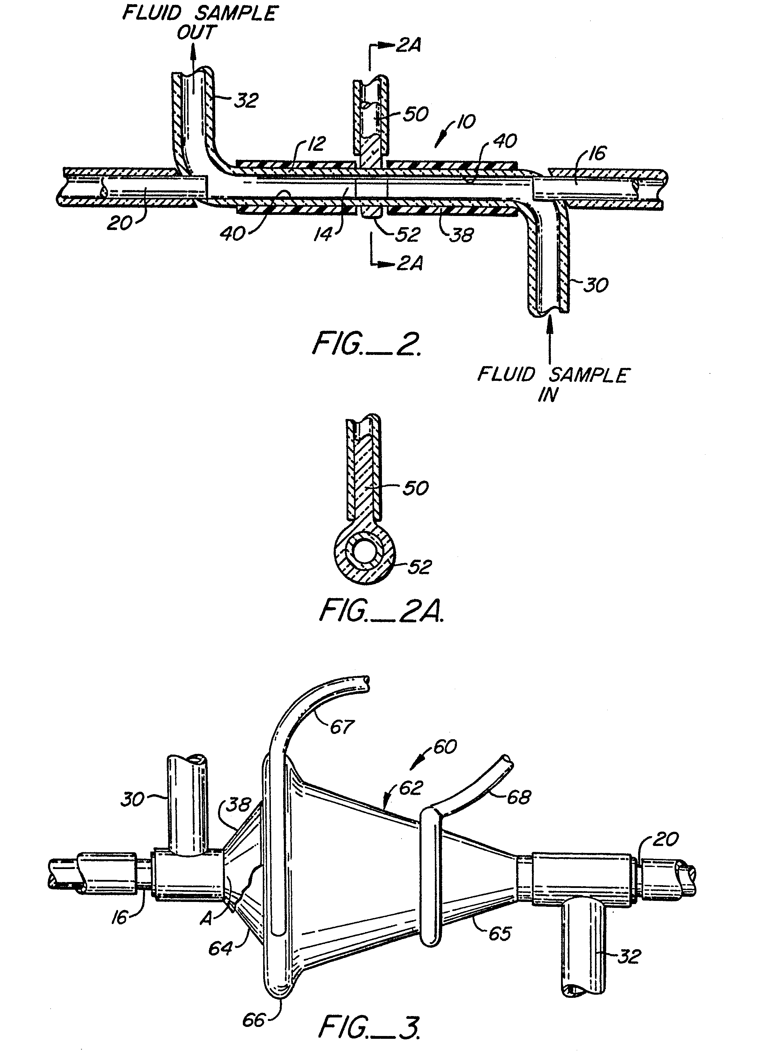

Referring now to Figs. 2 and 2A, an alternate embodiment of the optical detector cell 10 will be described. Where applicable, the same reference numbers will be used for corresponding elements in Figs. 2 and 2A as were used in Fig. 1.

The primary difference in the embodiment of Fig. 2 is that both the sample tube 12 and the inlet and outlet tubes 30, 32 are formed from a continuous length of tubing. Such a construction has the advantage of providing a smooth transition as the sample flows in and out of the sample chamber 14. Minimizing turbulence in the flow, in turn, minimizes the dead volume in the sample chamber 14, and increases the accuracy of the detection. The first and second optical waveguides 16 and 22 are fused into the elbows which define the transitions between the inlet and outlet tubes 30, 32 with the sample tube 12.

The embodiment of Fig. 2 also includes a third waveguide 50 which is joined to the sample tube at a point between the inlet and outlet 30, 32. As illustrated, the third waveguide 50 terminates in a ring 52 which encircles the sample tube 12 and is fused thereagainst. The reflective coating 40 which is deposited on the inner wall of the sample tube 12 is broken at the point where the ring 52 is located so that light from the sample chamber 14 is transmitted through the wall of the sample tube 12 and into the ring 52. The ring 52 acts as a waveguide and the light is directed into the third waveguide 50 where it can be transmitted to the photosensor 22 for processing. By providing for light detection at two points along the length of the sample tube 12, solutes which do not obey Beer's Law (i.e., which display absorption not linearly related to sample thickness) may be analyzed by well known computational techniques.

Referring now to Fig. 3, an embodiment of the invention which allows the simultaneous measurement of light absorbance and fluorescence of a sample is illustrated. A detector cell 60 is welded at each end to optical waveguides 16 and 20, as described hereinbefore. Inlet tube 30 and outlet tube 32 define a flow path through the detector cell 60 for the sample fluid.

A sample tube 62 is provided which is expanded to accommodate a diverging light beam from a hypothetical origin point A. The sample tube 62 includes a diverging conical section 64 which defines a divergent beam path from the origin A and a converging conical section 65 which absorbs light emanating from the origin A and from points downstream from the origin A. The wall is further expanded at the juncture of the cones 64 and 65 to form a girdle 66, which is outside the divergent beam path defined by the conical section 65 of the sample tube.

The geometry of the sample tube 60, as just described, is able to substantially isolate fluorescing light from light entering the tube 60 from the source waveguide 16. Light propagating down the tube can be considered to emanate from origin A. Since the beam path from origin A is limited by the conical section 64 (which is clad with absorptive material 38), light from the source waveguide 16 is unable to enter the girdle 66. Fluorescent light, however, emanates isotropically from points downstream of origin A and a portion of such fluorescent light will be able to enter the girdle region 66. A third waveguide 67 is provided to collect the light which strikes the girdle. Although the waveguide 67 is illustrated as fused to the outside surface of girdle 66, the waveguide 66 may penetrate the girdle wall or be attached in any manner which permits the waveguide to collect the light.

A fourth optical waveguide 68 may be provided to collect light which strikes the converging conical section 65 of the sample tube 60. Such a location is particularly useful in collecting forward scattered light. By placing absorptive cladding (not shown) on the outer surface of the converging section 65, and placing the waveguide 68 at a constant radius, light scattered at a particular angle may be preferentially detected.

In addition to absorbance, fluorescense and forward light-scattering, it will sometimes be desirable to detect backward light-scattering, depending on the nature of the fluid being analyzed. The detection of backward light-scattering (i.e., light reflected in a direction back toward the source waveguide 16) may be accomplished in the source beam 16 by providing a coupling (not shown) which directs a portion of the light travelling backward through the waveguide 16 to a photosensor (not shown).

The fourth optical waveguide 68 is wrapped around the converging portion of the sample tube 62 and gathers light that has not been attenuated by the absorbing medium.

Although the best mode contemplated for carrying out the present invention has been herein shown and described, it will be appreciated that variations and modifications may be made without departing from what is regarded to be the subject matter of the present invention.

CLAIMS:-

1.      An optical detector cell for determining the presence of a solute in a fluid sample, said detector cell being characterised by:

an elongate sample chamber (14) have a fluid inlet and fluid outlet means which define an axial flow path through the chamber for the sample;

a first optical waveguide (16) arranged to transmit light from a source to one end of the chamber (12) so that at least a portion of the light travels axially into the chamber; and

a second optical waveguide (20) disposed at the other end of the detection chamber (12) to collect light from the chamber and transmit the light to a remote analyzer.

2.      An analytical detection system which determines the presence of a solute in a fluid sample by passing light from a light source (18) through a detector cell (10) containing the sample and analyzing light from the sample with a photosensor (22), the detector cell (10) being characterised by:

an elongate sample chamber (14) having fluid inlet and fluid outlet means (30,32) the chamber (12) defining an axial flow path through the chamber for the fluid;

a first optical waveguide (16) arranged to transmit light from the light source (18) into the sample chamber so that at least a portion of the light travels along said axial flowpath through chamber; and

a second optical waveguide (20) disposed at the other end of the sample chamber to collect light from the chamber and transmit the light to the photosensor (22).

3. A detector cell as claimed in claims 1 or 2, wherein the sample chamber (14) is defined by a cylindrical tube (12) and the first and second waveguides (16,20) are defined by cylindrical rods.

4. A detector cell as claimed in claim 3, wherein the internal diameter of the cylindrical tube (12) is approximately equal to the diameter of the cylindrical rods (16,20).

5. A detector cell as claimed in claim 3 or 4, wherein the outer wall of the cylindrical tube (12) is clad with light-absorbing material (38) so that the wall is inhibited from axially propagating light.

6.      A detector cell as in claim 3, 4 or 5, wherein the inner wall of the cylindrical tube (12) is coated with a light reflecting material (40) to inhibit the absorbance of light from the sample chamber by the wall of the tube.

7.      An optical detector cell as claimed in any preceding claim wherein the sample chamber (14) and the fluid inlet and outlet means (30,32) are defined by a common cylindrical tube (12) which is bent in an S-shaped pattern to define the sample flow path.

8.      An optical detector cell as claimed in claims 1 or 2 wherein the sample chamber (14) is defined by a diverging conical section (64) followed by a converging conical section (65) with an expanded girdle section (66) at the juncture between the diverging and converging sections whereby the light entering the girdle section is limited to isotropic light emanating from a point downstream of the apex of the diverging conical section.

9.      A method for observing and analyzing a continuous stream of sample fluid in order to detect the preserve of a solute, said method employing an optical detector  cell (10) characterised by:

passing the sample fluid through and along the length of a sample chamber (14);

transmitting light by means of a first optical waveguide (16) so that at least a portion of the light propagates into and along the length of the chamber (14);

collecting light from the sample chamber (14) by means of a second optical waveguide (20); and

analyzing the collected light to determine the presence of the solute.

10.     A method as claimed in claim 9, wherein the light collected results at least in part from fluorescence of one or more solutes in the sample fluid.

11.     A method as claimed in claim 9, wherein the light collected results from light propagating through the sample chamber from the first waveguide, said propagated light being absorbed proportionally to the presence of one or more solutes in the sample fluid.

| OUTPUT | ANALYZER |
|--------|----------|
| LIGHT SOURCE | PHOTO-SENSOR |

*26* *24* *18* *22*

FLUID SAMPLE IN

*30* *10* *38* *20*

*36*

*16* *40* *14* *12* *32*

FLUID SAMPLE OUT

FIG.—1.

FLUID SAMPLE OUT

2A

32

12

50

10

40

16

20

40

14

52

38

2A

30

FLUID SAMPLE IN

FIG.__2.

50

52

FIG.__2A.

0089157

67

60

62

68

30

38

20

16

A

64

65

32

66

FIG.__3.

European Patent
Office

**EUROPEAN SEARCH REPORT**

**0089157**
Application number

EP  83 30 1182

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| | | | G 01 N   21/05 |
| X | US-A-3 834 821  (A. FERRARI et al.)  * Columns 5-7; figure 3 * | 1-4,9, 11 | |
| X | US-A-4 260 257  (W. NEELEY)  * Columns 3-4 * | 1-5 | |
| X | US-A-3 954 341  (K. UFFENHEIMER)  * Column 4; figure 3 * | 1,2,7 | |
| A | US-A-3 418 053  (M.H. PELAVIN)  * Column 4; figures 2-4 * | 1 | |
| A | FR-A-2 370 277  (DRAGERWERK AG.)  * Pages 3,5; figures 1-4 * | 6,7 | |
| A | DE-B-2 626 642  (W. ADRIAN)  * Columns 3-4; figure 1 * | 6,7 | **TECHNICAL FIELDS SEARCHED (Int. Cl. ³)**  G 01 N   21/05  G 01 N   21/85 |
| A | GB-A-1 012 065  (TECHNICON INST.)  * Pages 1-2; figure 3 * | 7 | |

The present search report has been drawn up for all claims

| Place of search THE HAGUE | Date of completion of the search 30-05-1983 | Examiner BOEHM CH.E.D. |
|---|---|---|